# EUROPEAN PATENT SPECIFICATION

(11) **EP 1 607 828 B1**
(45) Date of publication and mention of the grant of the patent: **24.01.2018**
(21) Application number: 05012747.1
(22) Date of filing: 14.06.2005
(51) Int. Cl.: G06F 1/14

(54) **Method for managing data acquisition time**
Verfahren zur Verwaltung von Daten-Erfassungszeiten
Méthode de gestion du temps d'acquisition de données

(30) Priority: 15.06.2004 JP 2004177558
(43) Date of publication of application: 21.12.2005
(73) Proprietor: NTT DoCoMo, Inc., Tokyo 100-6150 (JP)
(72) Inventor: Uchida, Motoyuki, Chiyoda-ku Tokyo (JP)
(74) Representative: Hoffmann Eitle

(56) References cited:
- EP-A2- 0 986 202
- WO-A1-02/07032
- JP-A- 2004 086 494
- US-A1- 2002 087 719

## Description

### BACKGROUND OF THE INVENTION

### 1. Field of the Invention

The present invention relates to a time management server, an information terminal, a time management system and a time management method. The present invention particularly relates to a time management server, an information terminal, a time management system and a time management method, which are suitable for making times of information terminals coincide with each other.

### 2. Description of the Related Art

EP 0 986 202 A2 discloses a variety of enhancements to a time synchronization protocol for a distributed system including techniques for improving accuracy by separating a unique timing point from a delimiter for the timing data packet.

According to JP 2004 086494 A, a client downloads a time of day verification requesting program from a time of day verification server and starts the program.

WO 02/07032 A1 discloses a method for correcting times on the internet, comprising steps of: producing a certain standard time and providing the produced time through the internet; and downloading the standard time through a user computer and correcting a computer time.

US 2002/087719 A1 discloses a data transmission and reception system for exchanging data such as e-mail by using accurate time information over a network.

Heretofore, for example, data backup, which is storing data stored by a mobile phone in a personal computer other than the mobile phone, and transferring data to another mobile phone have been carried out. Moreover, an information terminal synchronizing with a standard time server for managing a standard time has been proposed (for example, refer to Japanese Patent Laid-Open Publication No. 2004-86494).

However, in the conventional backup or data transfer, it has been impossible to provide set-in-providing-source time information, which is set in a providing source information terminal for providing data, and providing source data in association with each other to a providing destination information terminal. Therefore, it has been difficult for the providing destination information terminal to store the data while maintaining a relationship between the providing source data and the set-in-providing-source time information. When maintaining the relationship is desired, storing the set-in-providing-source time information in the providing destination information terminal separately from the providing source data is required, and this has been cumbersome. Such a problem has been significant when there are many providing destination information terminals. Moreover, in such a method of synchronizing the information terminal with the standard time server, it has been impossible to make the times of the providing source information terminal and providing destination information terminal coincide with each other.

### SUMMARY OF THE INVENTION

An object of the present invention is to easily maintain, in a providing destination terminal, a relationship between providing source data and set-in-providing-source time information in a providing source information terminal.

The object of the invention is achieved by the subject-matter of the independent claims. Advantageous embodiments are disclosed by the dependent claims.

A time management server according to an example includes an acquisition unit configured to acquire providing source data and set-in-providing-source time information from a providing source information terminal, a calculation unit configured to calculate providing time information to be provided to a providing destination information terminal by using the set-in-providing-source time information and an inter-terminal reference time, and a providing unit configured to provide the providing source data and the providing time information to the providing destination information terminal.

The "providing source information terminal" is an information terminal of a providing source, which provides data. The "providing source data" is the data provided by the providing source information terminal. The "providing destination information terminal" is an information terminal of a providing destination to which the providing source information terminal provides the providing source data. The "set-in-providing-source time information" is information concerning a time set in the providing source information terminal. The "inter-terminal reference time" is a time common to the providing source information terminal and the providing destination information terminal, and is a time serving as a reference when the times of the providing source information terminal and the providing destination information terminal are made to coincide with each other. The "providing time information" is calculated by the time management server by using the set-in-providing-source time information and the inter-terminal reference time, and is information concerning the time to be provided to the providing destination information terminal.

According to the time management server as described above, the providing time information associated with the providing source data, which is calculated by using the set-in-providing-source time information and the inter-terminal reference time can be provided to the providing destination information terminal. Therefore, the providing destination information terminal can easily maintain the relationship between the providing source data and the set-in-providing-source time information in the providing source information terminal based on the acquired providing source data and providing time information.

An information terminal according to an example includes a storage unit configured to store calculated set time information associated with providing source data of a providing source information terminal, an acquisition unit configured to acquire the providing source data and providing time information from a time management server configured to provide the providing time information associated with the providing source data, which is calculated by using set-in-providing-source time information of the providing source information terminal and an inter-terminal reference time, and a registering unit configured to register the calculated set time information associated with the providing source data in the storage unit based on the providing time information. The "calculated set time information" is set-in-providing-source time information calculated based on the inter-terminal reference time and a difference on the basis of the set-in-providing-source time information and the inter-terminal reference time.

According to the information terminal as described above, the providing source data and the providing time information calculated by using the set-in-providing-source time information and the inter-terminal reference time can be acquired from the time management server. Then, the information terminal can register the calculated set time information associated with the providing source data in the storage unit based on the providing time information. Therefore, in the case of serving as the providing destination information terminal, the information terminal can easily maintain the relationship between the providing source data and the set-in-providing-source time information in the providing source information terminal.

An information terminal according to another example includes a calculation unit configured to calculate a difference based on set-in-providing-source time information and an inter-terminal reference time, and a providing unit configured to provide providing source data and the difference to a providing destination information terminal.

The information terminal as described above serves as the providing source information terminal, and can provide the difference based on the set-in-providing-source time information and the inter-terminal reference time to the providing destination information terminal. Therefore, the providing destination information terminal can easily maintain the relationship between the providing source data and the set-in-providing-source time information in the providing source information terminal based on the acquired providing source data and providing time information.

An information terminal according to another example includes a storage unit configured to store calculated set time information associated with providing source data of a providing source information terminal, an acquisition unit configured to acquire the providing source data and a difference based on set-in-providing-source time information of the providing source information terminal and an inter-terminal reference time from the providing source information terminal, and a registering unit configured to calculate the calculated set time information based on the difference and the inter-terminal reference time, and register the calculated set time information associated with the providing source data in the storage unit.

The information terminal as described above serves as the providing destination information terminal, and can acquire the providing source data and the difference based on the set-in-providing-source time information and the inter-terminal reference time from the providing source information terminal. Then, the information terminal can calculate the calculated set time information based on the difference and the inter-terminal reference time, and can store the calculated set time information associated with the providing source data in the storage unit. Therefore, the providing destination information terminal can easily maintain the relationship between the providing source data and the set-in-providing-source time information in the providing source information terminal.

A time management system according to an example includes a time management server configured to acquire providing source data and set-in-providing-source time information from a providing source information terminal, calculate providing time information to be provided to a providing destination information terminal by using the set-in-providing-source time information and an inter-terminal reference time, and provide the providing source data and the providing time information to the providing destination information terminal, and a providing destination information terminal configured to acquire the providing source data and the providing time information from the time management server, and register calculated set time information associated with the providing source data in a storage unit based on the providing time information.

According to the time management system as described above, the time management server can provide the providing time information associated with the providing source data, which is calculated by using the set-in-providing-source time information and the inter-terminal reference time to the providing destination information terminal. Then, the providing destination information terminal can register the calculated set time information associated with the providing source data in the storage unit based on the providing source data and the providing time information which are acquired from the time management server. Therefore, the providing destination information terminal can easily maintain the relationship between the providing source data and the set-in-providing-source time information in the providing source information terminal.

A time management system according to another example includes a providing source information terminal configured to calculate a difference based on set-in-providing-source time information and an inter-terminal reference time, and provide providing source data and the difference to a providing source information terminal, and the providing destination information terminal configured to acquire the providing source data and the difference from the providing source information terminal, calculate calculated set time information based on the difference and the inter-terminal reference time, and register the calculated set time information associated with the providing source data in a storage unit.

According to the time management system as described above, the providing source information terminal can provide the providing source data and the difference based on the set-in-providing-source time information and the inter-terminal reference time to the providing destination information terminal. Then, the providing destination information terminal can calculate the calculated set time information based on the difference and the inter-terminal reference time, and can register the calculated set time information associated with the providing source data in the storage unit. Therefore, the providing destination information terminal can easily maintain the relationship between the providing source data and the set-in-providing-source time information in the providing source information terminal.

A time management method according to an example includes acquiring providing source data and set-in-providing-source time information form a providing source information terminal by a time management server, calculating providing time information to be provided to a providing destination information terminal by using the set-in-providing-source time information and an inter-terminal reference time by the time management server, providing the providing source data and the providing time information to the providing destination information terminal by the time management server, acquiring the providing source data and the providing time information from the time management server by the providing destination information terminal, and storing the calculated set time information associated with the providing source data in a storage unit based on the providing time information by the providing destination information terminal.

A time management method according to another example includes calculating a difference based on set-in-providing-source time information and an inter-terminal reference time by a providing source information terminal, providing providing source data and the difference to a providing destination information terminal by the providing source information terminal, acquiring the providing source data and the difference from the providing source information terminal by the providing destination information terminal, calculating calculated set time information based on the difference and the inter-terminal reference time by the providing destination information terminal, and registering the calculated set time information associated with the providing source data in a storage unit by the providing destination information terminal.

### BRIEF DESCRIPTION OF THE DRAWINGS

FIG. 1 is a diagram showing a time management system according to a first embodiment of the present invention.
FIG 2 is a block diagram showing an information terminal according to the first embodiment of the present invention.
FIG 3 is a diagram showing a storage unit of the information terminal according to the first embodiment of the present invention.
FIG. 4 is a block diagram showing a time management server according to the first embodiment of the present invention.
FIG. 5 is a flowchart showing a procedure of a case where the information terminal according to the first embodiment of the present invention calculates a terminal reference time as calculated set time information.
FIG. 6 is a flowchart showing a procedure of a case where the time management server according to the first embodiment of the present invention calculates the terminal reference rime as the calculated set time information.
FIG 7 is a flowchart showing a procedure of a case where the information terminal according to the first embodiment of the present invention calculates data time information as the calculated set time information.
FIG. 8 is a flowchart showing a procedure of a case where the time management server according to the first embodiment of the present invention calculates the data time information as the calculated set time information.
FIG. 9 is a diagram showing a time management system according to an example of the present invention.
FIG. 10 is a flowchart showing a procedure of a case where an information terminal according to the example of the present invention calculates the terminal reference time as the calculated set time information.
FIG. 11 is a flowchart showing a case where the information terminal according to the example of the present invention calculates the data time information as the calculated set time information.

### DETAILED DESCRIPTION OF THE FIRST EMBODIMENT AND THE EXAMPLE

### [First Embodiment]

### (Time management system)

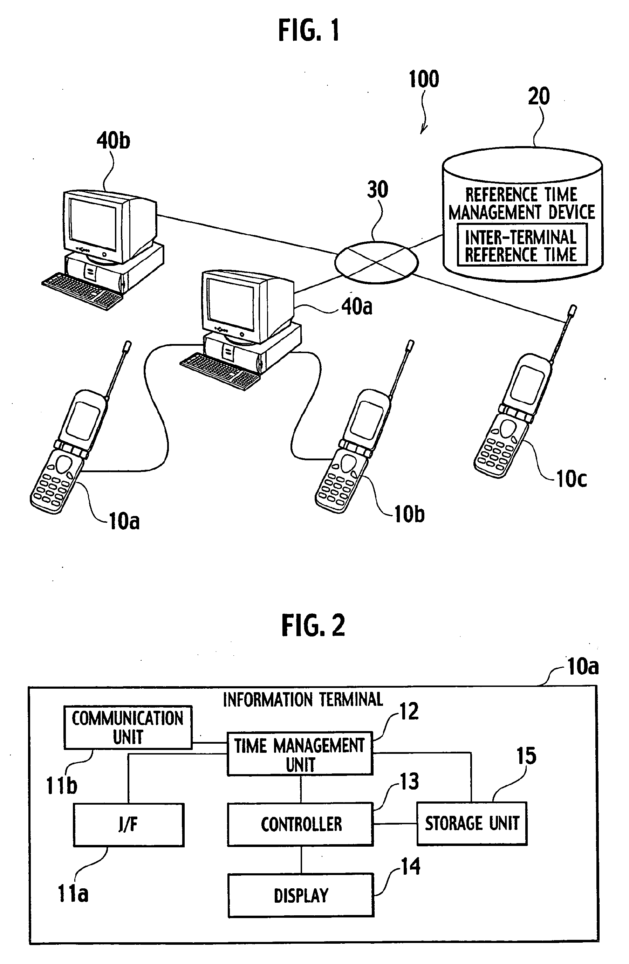

As shown in FIG. 1, a time management system 100 includes plural information terminals 10a, 10b and 10c, a reference time management device 20, a network 30, and plural time management servers 40a and 40b.

Time and information concerning the time, such as set-in-providing-source time information, an inter-terminal reference time, providing time information, a difference based on the set-in-providing-source time information and the inter-terminal reference time, calculated set time information, a terminal reference time, and data time information, are hereinafter generically referred to as "time information". The "terminal reference time" is a time serving as a reference in the information terminal itself. Therefore, the terminal reference time is used as a processing time of data and display time for the information terminal itself. The "data time information" is information concerning a time relating to the data.

The reference time management device 20 stores the inter-terminal reference time. The reference time management device 20 provides the inter-terminal reference time to the time management servers 40a and 40b and the information terminals 10a to 10c through the network 30.

The time management servers 40a and 40b acquire providing source data and the set-in-providing-source time information from a providing source information, terminal. The time management servers 40a and 40b calculate the providing time information to be provided to a providing destination information terminal by using the set-in-providing-source time information and the inter-terminal reference time. Then, the time management servers 40a and 40b provide the providing source data and the providing time information to the providing destination information terminal.

The time management servers 40a and 40b may connect to the providing source information terminal and the providing destination information terminal in parallel, or may connect to the providing source information terminal to acquire the providing source data therefrom, disconnect such a connection, and then connect to the providing destination information terminal to provide the acquired providing source data thereto. Moreover, it is not necessary for the time management servers 40a and 40b to provide the providing source data and the providing time information at the same time. If the providing time information can be associated with the providing source data, the providing source data and the providing time information may be provided separately. The number of time management servers 40a and 40b is not limited, either, and the number may be one or more than two.

Each of the information terminals 10a to 10c serves as either the providing source information terminal or the providing destination information terminal. In the case of serving as the providing source information terminal, each of the information terminals 10a to 10c provides the providing source data and the set-in-providing-source time information to the time management servers 40a and 40b. In the case of serving as the providing destination information terminal, each of the information terminals 10a to 10c acquires the providing source data and the providing time information from the time management servers 40a and 40b, and registers the calculated set time information associated with the providing source data based on the providing time information in a storage unit.

The information terminals 10a to 10c can serve as the providing source information terminal, for example, when the information terminals 10a to 10c ensure backup of the scored data by storing the data also in another information terminal, transfer the stored data to another information terminal, provide the data to the providing destination information terminal by processing, and so on. Meanwhile, the information terminals 10a to 10c can serve as the providing destination information terminal, for example, when the information terminals 10a to 10c receive the backup of the data from another information terminal, receive the transfer of the data therefrom, receive the provision of the data from the providing source information terminal by processing, and so on. The information terminals 10a to 10 include, for example, mobile phones, portable information terminals (PDA: personal digital assistants), personal computers, servers, and the like.

The time management servers and the information terminals may be connected to each other through the network 30 like the time management servers 40a and 40b and the information terminal 10c, or may be connected not through the network 30 like the time management servers 40a and 40b and the information terminals 10a and 10b. The network 30 includes, for example, a mobile communication network, a wireless LAN, the Internet, and the like.

Next, the information terminals 10a to 10c will be described in detail by using FIG. 2. The information terminal 10a includes an interface (hereinafter, described as "I/F") 11a, a communication unit 11b, a time management unit 12, a controller 13, a display 14, and a storage unit 15. The information terminals 10b and 10c also have similar configurations to that of the information terminal 10a.

The I/F 11a connects to the time management servers 40a and 40b and the other information terminals 10b and 10c not through the network 30, and transmits/receives the providing source data and the time information thereto/therefrom. The I/F 11a may be one that connects to the time management servers 40a and 40b and the other information terminals 10b and 10c by cables, or may be one that connects to the time management servers 40a and 40b and the other information terminals 10b and 10c by an infrared ray and a radio wave. For example, the I/F 11a can use the IrDA that transmits/receives by the infrared ray, the Bluetooth (registered trademark) transmits/receives by the radio wave, and the like.

The communication unit 11b transmits/receives the providing source data and the time information to/from the time management servers 40a and 40b and the other information terminals 10b and 10c through the network 30. The 1/F 11a and the communication unit 11b input the received providing source data and time information to the time management unit 12. The I/F 11a and the communication unit 11b acquire, from the time management unit 12, the providing source data and the time information which are to be transmitted by the information terminal 10a.

The storage unit 15 stores the calculated set time information associated with the providing source data of the providing source information terminal. The storage unit 15 can also store time information other than the calculated set time information and the other information. The storage unit 15 stores the data and time information of the other information terminals 10b and 10c, and the data and time information of the information terminal 10a itself. Specifically, the storage unit 15 stores the providing source data and the time information which are to be provided from the other information terminals 10b and 10c that serves as the providing source information terminals when the information terminal 10a serves as the providing destination information terminal. In addition, the storage unit 15 stores the providing source data and the time information which are the data and the time information of the information terminal 10a itself and to be provided to the other information terminals 10b and 10c, when the information terminal 10a serves as the providing source information terminal. Furthermore, the storage unit 15 stores the providing source data and time information of the plural information terminals 10b and 10c.

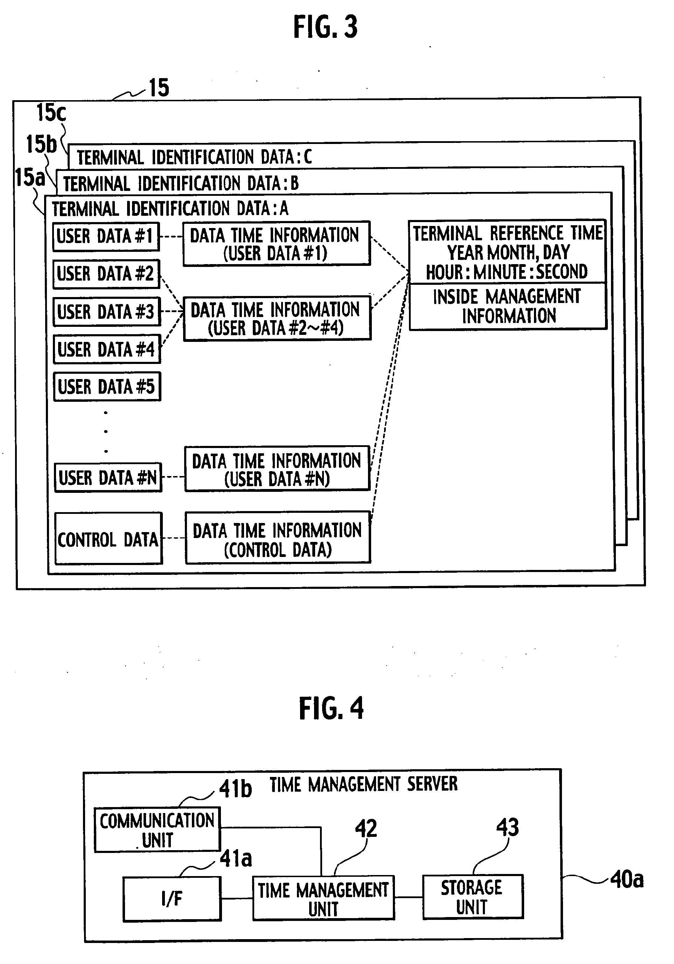

Therefore, the storage unit 15 stores the providing source data and the time information for each of the information terminals 10a to 10c. For example, the storage unit 15 stores the providing source data and the time information in association with terminal identification data for identifying the information terminals 10a to 10c. The terminal identification data includes a user ID, terminal number, phone number, address and the like of the information terminal. Specifically, as shown in FIG. 3, the storage unit 15 can include storage areas 15a to 15c for storing the information concerning the respective information terminals 10a to 10c. The respective storage areas 15a to 15c for storing information of the information terminals 10a to 10c can be distinguished by the terminal identification data.

The storage area 15a stores the information of the information terminal 10a, and the terminal identification data "A" of the information terminal 10a is assigned thereto. The storage area 15b stores the information of the information terminal 10b, and the terminal identification data "B" of the information terminal 10b is assigned thereto. The storage area 15c stores the information of the information terminal 10c, and the terminal identification data "C" of the information terminal 10c is assigned thereto.

As shown in FIG. 3, the providing source data stored in the storage unit 15 includes user data, control data, and inside management information. The user data is data used by a user of the information terminal. The control data is data for controlling the information terminal. The user data and the control data are provided as the providing source data to the providing destination information terminal. The inside management information is data to be managed in the information terminal without being provided to the providing destination information terminal.

The set time information set in the information terminals 10a to 10c includes the terminal reference time, the data time information relating to the data, and the like. The storage unit 15 stores set time information (hereinafter, referred to as "self-set time information") set in the information terminal 10a itself, and the set-in-providing-source time information set in the other information terminals 10b and 10c serving as the providing source information terminals. The self-set time information is stored in the storage area 15a, and the set-in-providing-source time information of the information terminals 10b and 10c are stored in the storage areas 15b and 15c, respectively.

The data time information relating to the user data and the control data is associated with the respective user data and control data. The data time information includes, for example, a difference between the terminal reference time of the information terminal 10a itself and acquired time information when the information terminal 10a acquires the providing source data and time information of other information terminals, a reception time and update time of the data, and the like. It is not necessary to associate the data time information with all of the user data and the control data. Moreover, common data time information may be associated with plural user data and control data. For example, the common data time information can be associated with plural user data acquired from the other information terminals at the same time. The number of user data and control data stored in the storage unit 15 is not limited.

The time management unit 12 is an acquisition unit configured to acquire the providing source data and the providing time information from the time management servers 40a and 40b configured to provide the providing time information associated with the providing source data. The providing time information is calculated by using the set-in-providing-source time information of the providing source information terminal and the inter-terminal reference time. Moreover, the time management unit 12 also functions as a registering unit configured to register the calculated set time information associated with the providing source data in the storage unit 15 based on the providing time information.

When the information terminal 10a serves as the providing destination information terminal, the time management unit 12 acquires the providing source data and providing time information of the providing source information terminal from the time management servers 40a and 40b through the I/F 11a or the communication unit 11b. The terminal identification data of the providing source information terminal is associated with the providing source data and the providing time information.

The providing time information includes at least one of a set of the difference based on the set-in-providing-source time information and the inter-terminal reference time and the inter-terminal reference time, and the calculated set time information calculated based on the difference and the inter-terminal reference time. Moreover, the providing time information may also include the set-in-providing-source time information as it is. When acquiring, as the providing time information, the difference based on the set-in-providing-source time information and the inter-terminal reference time and the inter-terminal reference time, the time management unit 12 first calculates the calculated set time information based on the difference and the inter-terminal reference time.

For example, when acquiring the difference between the terminal reference time of the providing source information terminal and the inter-terminal reference time and the inter-terminal reference time, the time management unit 12 can calculate the terminal reference time in the providing source information terminal as the calculated set time information by adding the difference to the inter-terminal reference time. Moreover, when acquiring a difference based on the data time information of the providing source information terminal and the inter-terminal reference time and the inter-terminal reference time, the time management unit 12 can calculate the data time information in the providing source information terminal as the calculated set time information by correcting the data time information by using the inter-terminal reference time and the difference.

The time management unit 12 registers the calculated set time information associated with the providing source data in the storage area for the corresponding providing source information terminal in the storage unit 15. For example, when the providing source information terminal is the information terminal 10b, and the terminal identification data "B" is associated with the acquired providing source data and providing time information, the time management unit 12 registers the user data and control data as the providing source data, the data time information as the calculated set time information, and the terminal reference time in the storage area 15b. The time management unit 12 registers the data time information associated with the user data and the control data. When acquiring the calculated set time information as it is as the providing time information, the time management unit 12 registers the acquired calculated set time information associated with the providing source data in the storage area for the corresponding providing source information terminal in the storage unit 15. When also acquiring the set-in-providing-source time information as the providing time information, the time management unit 12 registers the set-in-providing-source time information in the storage area for the corresponding providing source information terminal in the storage unit 15 together with the above.

The time management unit 12 may acquire the providing source data and the providing time information at the same time, or may acquire either one thereof first. Moreover, the time management unit 12 may acquire the set-in-providing-source time information and the set of the difference and the inter-terminal reference time or the calculated set time information at the same time, or may acquire either one thereof first. When the time management unit 12 does not acquire the providing source data and the providing time information at the same time, or separately acquire the plural kinds of providing time information, the time management unit 12 can associate the providing time information with the providing source data or various kinds of providing time information with each other by using the terminal identification data, then register them in the storage unit 15.

It is preferable that the set-in-providing-source time information and the calculated set time information are at least one of the terminal reference time in the providing source information terminal and the data time information of the providing source data in the providing source information terminal. According to this, a relationship between the providing source data and the terminal reference time or a relationship between the providing source data and the data time information in the providing source information terminal can be maintained also in the providing destination information terminal.

It is preferable that the time management unit 12 change and register the acquired data time information based on the calculated set time information (terminal reference time) in the case of registering the terminal reference time as the calculated set time information and registering the acquired data time information as the set-in-providing-source time information. According to this, the information terminals 10a to 10c can dynamically correct the data time information in response to the change of the terminal reference time. Then, the terminal reference times and data time information of the providing destination information terminal and the providing source information terminal can be made to coincide with each other. In addition, a relationship between the terminal reference time and the data time information in the providing source information terminal can be maintained also in the providing destination information terminal.

When the information terminal 10a serves as the providing source information terminal, the time management unit 12 acquires the user data and the control data as the providing source data, and the self-set time information such as the data time information and the terminal reference time as the set-in-providing-source time information, from the storage area 15a of the storage unit 15. The time management unit 12 provides the acquired providing source data and set-in-providing-source time information in association with the terminal identification data "A" of the information terminal 10a and the terminal identification data of the providing destination information terminal to the time management servers 40a and 40b through the I/F 11a or the communication unit 11b. The time management unit 12 may also provide the set-in-providing-source time information and the like to the time management servers 40a and 40b by itself. Alternatively, the time management unit 12 may receive a request for the set-in-providing-source time information from the time management servers 40a and 40b when the information terminal 10a connects to the time management servers 40a and 40b, and may provide the set-in-providing-source time information and the like to the time management servers 40a and 40b in response to the request.

Moreover, the time management unit 12 may provide the providing source data and the set-in-providing-source time information at the same time, or may provide either one thereof first. For example, the time management unit 12 may provide the providing source data before the calculation of the providing time information in the time management servers 40a and 40b, or may provide the providing source data after the calculation of the providing time information. Furthermore, the time management unit 12 may provide the data time information and the terminal reference time as the set-in-providing-source time information, or may provide either one thereof first. For example, the time management unit 12 first provides the terminal reference time and the providing source data. In this case, the time management unit 12 notifies whether or not data time information is associated with the providing source data of the time management servers 40a and 40b. Then, the time management unit 12 may provide the data time information only in the case of receiving the request for the data time information from the time management servers 40a and 40b.

The controller 13 acquires the user data, the control data, the terminal reference time and the data time information from the storage unit 13, and outputs these to the display 14. The display 14 displays the data and the time received from the controller 13. In the case of outputting the data of the information terminal 10a, the controller 13 acquires the data of the information terminal 10a, and the data time information and the terminal reference time, which are associated with the data from the storage area 15a, and outputs these. In the case of outputting the data of the information terminal 10b, the controller 13 acquires the data of the information terminal 10b, and the data time information and the terminal reference time, which are associated with the data from the storage area 15b, and outputs these. The case of the information terminal 10c is the same.

Each of the information terminals 10a to 10c as described above can be achieved by allowing a computer to carry out a program for allowing the computer to function as: a storage unit configured to store the calculated set time information associated with the providing source data of the providing source information terminal, an acquisition unit configured to acquire the providing source data and the providing time information from the time management server configured to provide the providing time information associated with the providing source data, which is calculated by using the set-in-providing-source time information of the providing source information terminal and the inter-terminal reference time, and a registering unit configured to register the calculated set time information associated with the providing source data in the storage unit based on the providing time information.

Next, the time management servers 40a and 40b will be described more in detail by using FIG. 4. The time management server 40a includes an I/F 41a, a communication unit 41b, a time management unit 42, and a storage unit 43. The time management server 40b also has a similar configuration to that of the time management server 40a.

The I/F 41a connects to the information terminals 10a to 10c not through the network 30, and transmits/receives the providing source data and the time information thereto/therefrom. The I/F 41a may be one that connects to the information terminals 10a to 10c by cables, or may be one that connects to the information terminals 10a to 10c by an infrared ray or a radio wave. For example, the I/F 41a can use the IrDA and the Bluetooth (registered trademark).

The communication unit 41b transmits/receives the providing source data and the time information to/from the information terminals 10a to 10c through the network 30. The I/F 41a and the communication unit 41b input the received providing source data and time information to the time management unit 42. The I/F 41a and the communication unit 41b acquires, from the time management unit 42, the providing source data and the providing time information which are transmitted by the time management server 40a.

The storage unit 43 temporarily stores the providing source data and the set-in-providing-source time information, which are acquired from the providing source information terminal, the terminal identification data of the providing source information terminal and the providing destination information terminal, and the providing time information to be provided to the providing destination information terminal.

The time management unit 42 is an acquisition unit configured to acquire the providing source data and the set-in-providing-source time information from the providing source information terminal. The time management unit 42 also functions as a calculation unit configured to calculate the providing time information to be provided to the providing destination information terminal by using the set-in-providing-source time information and the inter-terminal reference time. Moreover, the time management unit 42 also functions as a providing unit configured to provide the providing source data and the providing time information to the providing destination information terminal.

The time management unit 42 acquires the providing source data associated with the terminal identification data of the providing source information terminal, the providing time information, and the terminal identification data of the providing destination information terminal, from the providing source information terminal through the I/F 41a or the communication unit 41b. The time management unit 42 may acquire the set-in-providing-source time information and the like provided by the information terminals 10a to 10c themselves. Alternatively, the time management unit 42 may request the set-in-providing-source time information to the information terminals 10a to 10c connecting to the time management server 40a, and may acquire the set-in-providing-source time information and the like provided in response to the request.

Moreover, the time management unit 42 may acquire the data time information and the terminal reference time at the same time, or may acquire either one thereof first. For example, the time management unit 42 first acquires the terminal reference time and the providing source data. In this case, the time management unit 42 receives the notice as to whether or not the data time information is associated with the providing source data. Then, when the data time information is associated with the providing source data, the time management unit 42 may request the data time information to the information terminals 10a to 10c, and then acquire the data time information.

The time management unit 42 acquires the inter-terminal reference time from the reference time management device 20 through the I/F 41a or the communication unit 41b. As described above, it is preferable that the time management unit 42 acquire the inter-terminal reference time after starting the processing for making the times of the providing source information terminal and providing destination information terminal coincide with each other, and acquire the inter-terminal reference time for each processing.

The time management unit 42 first calculates a difference based on the acquired set-in-providing-source time information and the inter-terminal reference time. For example, when acquiring the terminal reference time as the set-in-providing-source time information, the time management unit 42 can calculate a difference based on the terminal reference time and the inter-terminal reference time. When acquiring the data time information as the set-in-providing-source time information, the time management unit 42 can calculate a difference between the terminal reference time and the data time information. When providing the providing time information including the difference based on the set-in-providing-source time information and the inter-terminal reference time and the inter-terminal reference time, the time management unit 42 registers the acquired providing source data, the terminal identification data of the providing destination information terminal, and the calculated difference and the inter-terminal reference time which are the providing time information in association with the terminal identification data of the providing source information terminal in the storage unit 43.

When providing the providing time information including the calculated set time information, the time management unit 42 further calculates the calculated set time information based on the difference and the inter-terminal reference time. For example, when calculating the difference between the terminal reference time of the providing source information terminal and the inter-terminal reference time, the time management unit 42 can calculate the terminal reference time as the calculated set time information by adding the difference to the inter-terminal reference time. Moreover, when calculating the difference based on the data time information of the providing source information terminal and the inter-terminal reference time, the time management unit 42 can calculate the data time information as the calculated set time information by correcting the data time information with the inter-terminal reference time and the difference. In this case, the time management unit 42 registers the acquired providing source data, the terminal identification data of the providing destination information terminal and the calculated set time information serving as the providing time information in association with the terminal identification data of the providing source information terminal in the storage unit 42.

When providing the providing time information including the difference based on the set-in-providing-source time information and the inter-terminal reference time and the inter-terminal reference time or the providing time information including the calculated set time information, in the case of providing the acquired set-in-providing-source time information as the providing time information, the time management unit 42 registers the set-in-providing-source time information in the storage unit 43. In the case of not providing the set-in-providing-source time information, the time management unit 42 may register the set-in-providing-source time information, or may discard the same without storing.

The time management unit 42 acquires the providing source data, the terminal identification data of the providing source information terminal and the providing destination information terminal, and the providing time information from the storage unit 43. The time management unit 42 provides the providing source data and the providing time information associated with the terminal identification data of the providing source information terminal to the providing destination information terminal through the I/F 41a or the communication unit 41b. The time management unit 42 may provide the providing source data and the providing time information at the same time, or may provide either one thereof first. Moreover, the time management unit 42 may provide the set-in-providing-source time information, and the difference and the inter-terminal reference time or the calculated set time information, which are the providing time information at the same time, or may provide either one thereof first.

Each of the time management servers 40a and 40b as described above can be achieved by allowing a computer to carry out a program for allowing the computer to function as: an acquisition unit configured to acquire the providing source data and the set-in-providing-source time information from the providing source information terminal; a calculation unit configured to calculate the providing time information to be provided to the providing destination information terminal by using the set-in-providing-source time information and the inter-terminal reference time, and a providing unit configured to provide the providing source data and the providing time information to the providing destination information terminal.

### (Time management method)

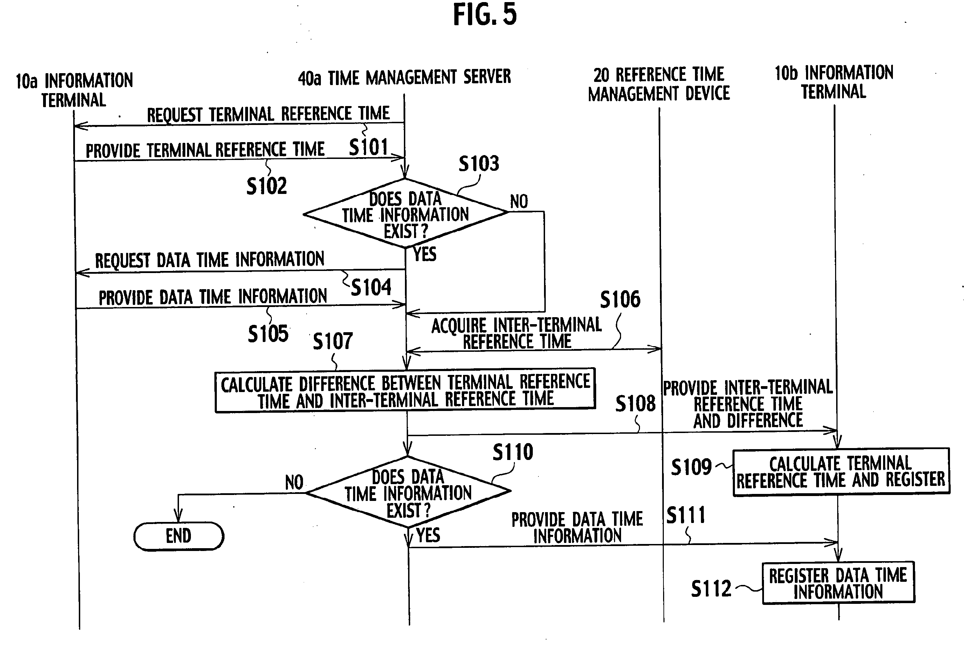

Next, a procedure of a time management method using the time management system 100 will be described. Description will be made below of the case where the information terminals 10a and 10b connect as the providing source information terminal and the providing destination information terminal to the time management server 40a, respectively. FIG. 5 shows a procedure of the case where the information terminal 10b calculates the terminal reference time as the calculated set time information.

The time management server 40a requests the terminal reference time to the information terminal 10a connecting thereto as the providing source information terminal (S101). In response to the request, the information terminal 10a provides the providing source data and the terminal reference time of the self-set time information, as the set-in-providing-source time information (S102). In this case, the information terminal 10a notifies that the data time information is associated with the providing source data.

The time management server 40a determines whether or not there exists the data time information associated with the acquired providing source data (S103). When the data time information exists, the time management server 40a requests the data time information to the information terminal 10a (S104). Then, the information terminal 10a provides the data time information to the time management server 40a (S105). Next, the time management server 40a acquires the inter-terminal reference time from the reference time management device 20 (S106). The time management server 40a goes to Step S106 also in the case of determining in Step S103 that the data time information associated with the providing source data does not exist. Note that the time management server 40a may acquire the terminal reference time and the data time information at the same time, or may first acquire the data time information and then acquire the terminal reference time.

The time management server 40a calculates the difference between the inter-terminal reference time and the terminal reference time acquired from the information terminal 10a, and registers the difference with the providing source data and the like in the storage unit 43 (S107). To the information terminal 10b, the time management server 40a provides the providing source data, and as the providing time information, the difference between the inter-terminal reference time and the terminal reference time acquired from the information terminal 10a, which is calculated in Step S107, and the inter-terminal reference time acquired in Step S106 (S108). The information terminal 10b calculates, as the calculated set time information, the terminal reference time in the information terminal 10a based on the acquired difference and inter-terminal reference time. The information terminal 10b registers the acquired providing source data and the calculated terminal reference time (calculated set time information) in the storage area of the storage unit 15 for storing the information of the information terminal 10a (S109).

The time management server 40a determines whether there exists the data time information as the set-in-providing-source time information of the information terminal 10a (S110). When the data time information exists, the time management server 40a provides the data time information to the information terminal 10b (S111). The information terminal 10b changes the acquired data time information based on the terminal reference time (calculated set time information) of the information terminal 10a, which is registered in the storage unit 15, and registers the changed data time information in the storage area of the storage unit 15 for storing the information of the information terminal 10a (S112). When it is determined in Step S110 that the data time information does not exist, the time management server 40a ends the processing.

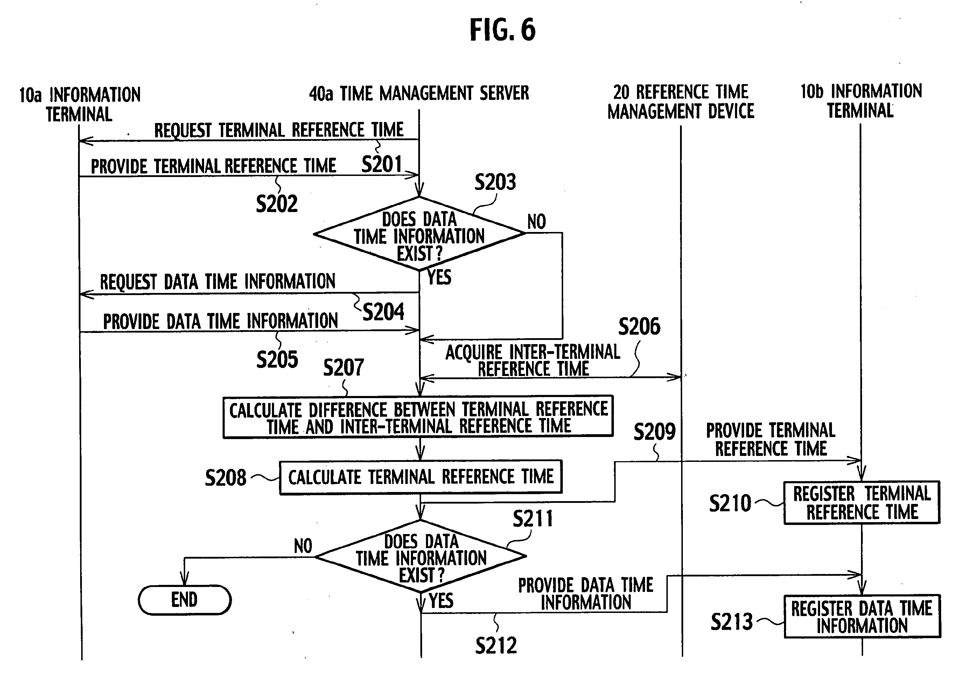

FIG. 6 shows a procedure of the case where the time management server 40a calculates the terminal reference time as the calculated set time information. First, Steps S201 to S207 similar to Steps S101 to S107 shown in FIG. 5 are performed. Subsequently to Step S207, the time management server 40a calculates, as the calculated set time information, the terminal reference time in the information terminal 10a based on the difference between the inter-terminal reference time and the terminal reference time acquired from the information terminal 10a, which is calculated in Step S207, and the inter-terminal reference time (S208).

The time management server 40a provides the providing source data, and the calculated set time information as the providing time information, that is, the calculated terminal reference time in the information terminal 10a, to the information terminal 10b (S209). The information terminal 10b registers the acquired terminal reference time (calculated set time information) in the information terminal 10a in the storage area of the storage unit 15 for storing the information of the information terminal 10a (S210). Then, Steps S211 to S213 similar to Steps S110 to S112 shown in FIG. 5 are performed.

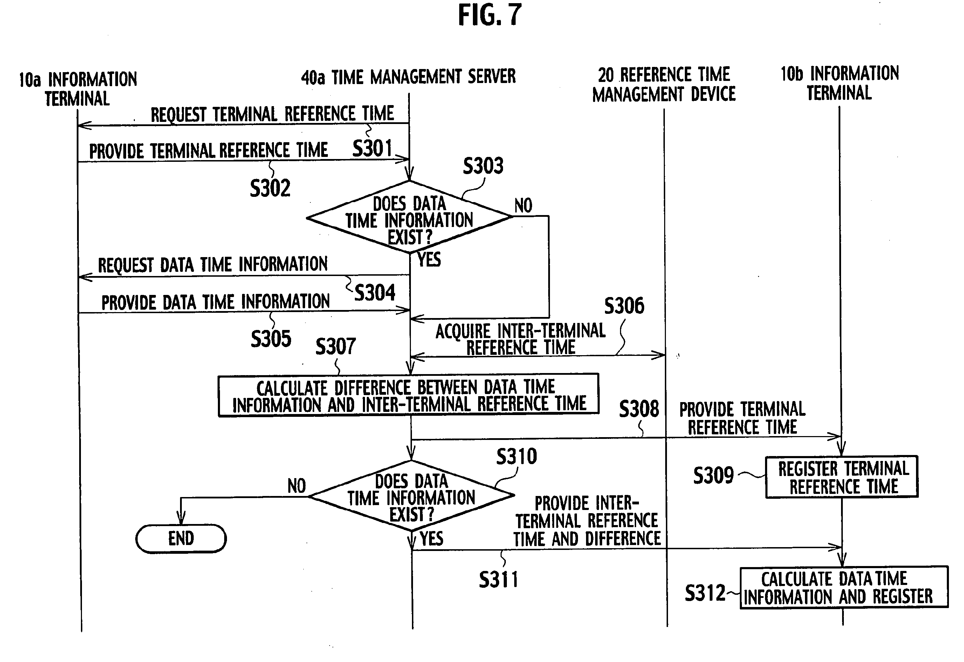

FIG 7 shows a procedure where the information terminal 10b calculates the data time information as the calculated set time information. First, Steps S301 to S306 similar to Steps S101 to S106 shown in FIG. 5 are performed. The time management server 40a calculates the difference based on the inter-terminal reference time and the data time information acquired from the information terminal 10a, and registers the difference with the providing source data and the like in the storage unit 43 (S307). The time management server 40a first provides the providing source data and the terminal reference time of the information terminal 10a, which is the set-in-providing-source time information, as the providing time information, to the information terminal 10b (S308). The information terminal 10b registers the acquired providing source data and terminal reference time of the information terminal 10a in the storage area of the storage unit 15 for storing the information of the information terminal 10a (S309).

The time management server 40a determines whether there exists the data time information as the set-in-providing-source time information of the information terminal 10a (S310). When the data time information exists, the time management server 40a provides, as the providing time information, the difference based on the inter-terminal reference time and the data time information acquired from the information terminal 10a, which is calculated in Step S307, and the inter-terminal reference time acquired in Step S306, to the information terminal 10b (S311). The information terminal 10b calculates, as the calculated set time information, the data time information in the information terminal 10a based on the acquired difference and inter-terminal reference time. The information terminal 10b registers the calculated data time information (calculated set time information) in the storage area of the storage unit 15 for storing the information of the information terminal 10a (S312). When it is determined in Step S310 that the data time information does not exist, the time management server 40a ends the processing.

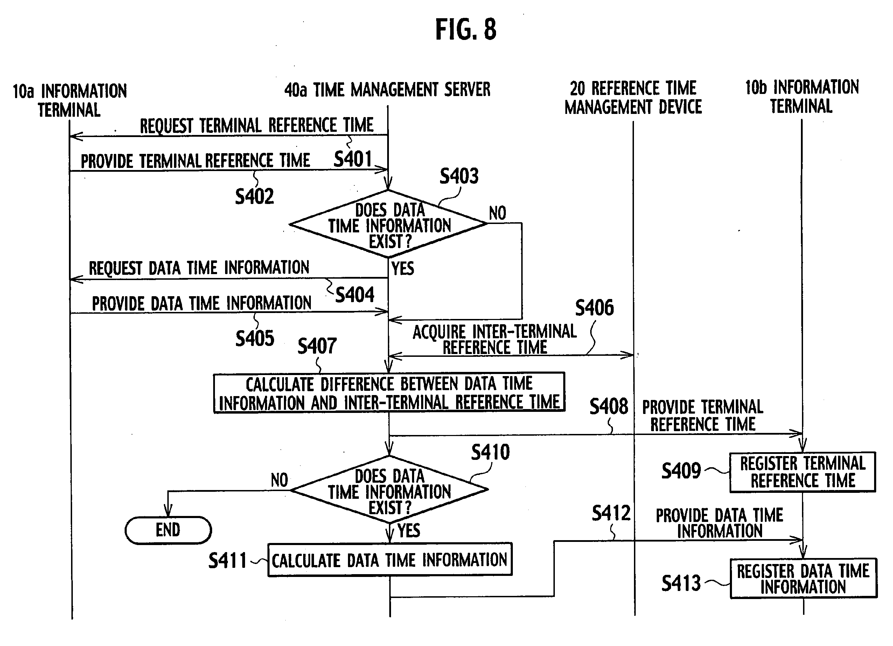

FIG. 8 shows a procedure of the case where the time management server 40a calculates the data time information as the calculated set time information. First, Steps S401 to S410 similar to Steps S301 to S310 shown in FIG. 7 are performed. When it is determined in Step S410 that the data time information exists, the time management server 40a calculates, as the calculated set time information, the data time information in the information terminal 10a based on the difference on the basis of the inter-terminal reference time and the data time information acquired from the information terminal 10a, which is calculated in Step S407, and the inter-terminal reference time (S411).

The time management server 40a provides, to the information terminal 10b, the calculated set time information as the providing time information, that is, the data time information in the information terminal 10a, which is calculated in Step S411 (S412). The information terminal 10b registers the acquired data time information (calculated set time information) in the information terminal 10a in the storage area of the storage unit 15 for storing the information of the information terminal 10a (S413). When it is determined in Step S410 that the data time information does not exist, the time management server 40a ends the processing.

According to the time management system 100, the time management servers 40a and 40b, the information terminals 10a to 10c, and the time management method, which are as described above, the time management servers 40a and 40b can provide the providing time information associated with the providing source data, which is calculated by using the set-in-providing-source time information and the inter-terminal reference time to the providing destination information terminal. Therefore, the providing destination information terminal can easily maintain the relationship between the providing source data and the set-in-providing-source time information in the providing source information terminal based on the acquired providing source data and providing time information. In particular, even in the case where the providing source information terminal provides the providing source data to plural providing destination information terminals, the relationship between the providing source data and the set-in-providing-source time information in the providing source information terminal can be easily maintained in the plural providing destination information terminals. Specifically, the relationship between the providing source data in the providing source information terminal and the terminal reference time or the data time information can be maintained in the providing destination information terminal.

Moreover, when each of the time management servers 40a and 40b calculates, as the providing time information, the difference based on the set-in-providing-source time information and the inter-terminal reference time, and provides the difference and the inter-terminal reference time, the providing destination information terminal can calculate the calculated set time information by using the difference and the inter-terminal reference time. Therefore, for example, control loads of the time management servers 40a and 40b can be reduced. Furthermore, when the time management servers 40a and 40b calculate and provide the calculated set time information as the providing time information, the providing destination information terminal can use the calculated set time information as it is. Therefore, for example, a control load of the providing destination information terminal can be reduced.

Moreover, the information terminals 10a to 10c can acquire the providing source data and the providing time information calculated by using the set-in-providing-source time information and the inter-terminal reference time from the time management servers 40a and 40b. Then, based on the providing time information, the information terminals 10a to 10c can register the calculated set time information associated with the providing source data in the storage unit 15. Therefore, in the case of serving as the information destination terminals, the information terminals 10a to 10c can easily maintain the relationship between the providing source data and the set-in-providing-source time information in the providing source information terminal.

Furthermore, the time management unit 12 can also acquire, as the providing time information, the difference based on the set-in-providing-source time information and the inter-terminal reference time and the inter-terminal reference time, calculate the calculated set time information based on the difference and the inter-terminal reference time, and register the calculated set time information in the storage unit 15. According to this, each of the information terminals 10a to 10c can acquire, as the providing time information, the difference based on the set-in-providing-source time information and the inter-terminal reference time and the inter-terminal reference time from the time management servers 40a and 40b, and calculate the calculated set time information by using the difference and the inter-terminal reference time.

### [example of the invention]

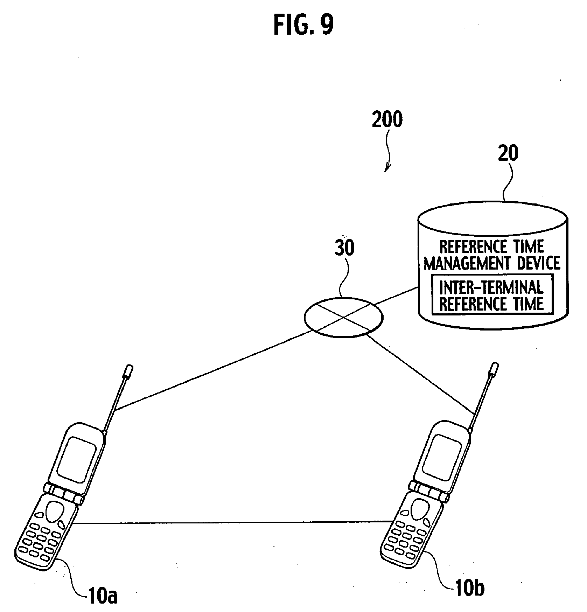

As shown in FIG 9, a time management system 200 includes the plural information terminals 10a and 10b, the reference time management device 20, and the network 30. As described above, the time management system 200 can be configured without using the time management servers 40a and 40b. In FIG. 9, the same reference numerals are assigned to substantially similar configurations to those in FIG. 1, and description thereof will be omitted. As shown in FIG. 9, the information terminals 10a and 10b may be connected to each other not through the network 30, or may be connected to each other through the network 30.

When serving as the providing source information terminal, each of the information terminals 10a and 10b calculates the difference based on the set-in-providing-source time information and the inter-terminal reference time, and provides the providing source data and the difference to the providing destination information terminals. When serving as the providing destination information terminal, each of the information terminals 10a and 10b acquires the providing source data and the difference from the providing source information terminal, calculates the calculated set time information based on the difference and the inter-terminal reference time, and registers the calculated set time information associated with the providing source data in the storage unit.

In the case of not using the time management servers 40a and 40b, the time management unit 12 shown in FIG.2 functions as a calculation unit configured to calculate the difference based on the set-in-providing-source time information and the inter-terminal reference time. Moreover, the time management unit 12 also functions as a providing unit configured to provide the providing source data and the difference to the providing destination information terminal. Furthermore, the time management unit 12 functions as an acquisition unit configured to acquire the providing source data and the difference based on the set-in-providing-source time information of the providing source information terminal and the inter-terminal reference time from the providing source information terminal. Further, the time management unit 12 also functions as a registering unit configured to calculate the calculated set time information based on the difference and the inter-terminal reference time, and register the calculated set time information associated with the providing source data in the storage unit 15.

When the information terminal 10a serves as the providing source information terminal, the time management unit 12 acquires the user data and the control data as the providing source data, and the self-set time information such as the data time information and the terminal reference time as the set-in-providing-source time information from the storage area 15a of the storage unit 15. The time management unit 12 acquires the inter-terminal reference time from the reference time management device 20 through the communication unit 11b.

For example, when acquiring the terminal reference time of the information terminal 10a, which is the self-set time information, as the set-in-providing-source time information from the storage unit 15, the time management unit 12 can calculate the difference based on the terminal reference time of the information terminal 10a and the inter-terminal reference time. When acquiring the data time information of the information terminal 10a, which is the self-set time information, as the set-in-providing-source time information from the storage unit 15, the time management unit 12 can calculate the difference based on the data time information of the information terminal 10a and the inter-terminal reference time. The time management unit 12 may calculate both the difference based on the terminal reference time and the inter-terminal reference time and the difference based on the data time information and the inter-terminal reference time, or may calculate either one thereof.

The time management unit 12 provides the acquired providing source data, the calculated difference:, and the terminal identification data "A" of the information terminal 10a in association with each other to the providing destination information terminal through the I/F 11a or the communication unit 11b. In addition to the difference, the time management unit 12 may provide the set-in-providing-source time information. For example, when providing the difference based on the terminal reference time of the information terminal 10a and the inter-terminal reference time, the time management unit 12 can provide the data time information of the information terminal 10a as the set-in-providing-source time information. Moreover, when providing the difference based on the data time information of the information terminal 10a and the inter-terminal reference time, the time management unit 12 can provide the terminal reference time of the information terminal 10a as the set-in-providing-source time information.

The time management unit 12 may provide the providing source data and the calculated difference at the same time, or may provide either one thereof first. For example, the time management unit 12 may provide the providing source data before calculating the difference, or may provide the providing source data thereafter. Moreover, also in the case of providing the set-in-providing-source time information in addition to the difference, the time management unit 12 may provide the difference and the set-in-providing-source time information at the same time, and may provide either one thereof first.

When the information terminal 10a serves as the providing destination information terminal, the time management unit 12 acquires the providing source data and the difference based on the set-in-providing-source time information of the providing source information terminal and the inter-terminal reference time through the I/F 11a or the communication unit 11b. The time management unit 12 acquires the inter-terminal reference time from the reference time management device 20 through the communication unit 11b.

The time management unit 12 calculates the calculated set time information based on the acquired difference and inter-terminal reference time. When acquiring the difference based on the terminal reference time of the providing source information terminal and the inter-terminal reference time, the time management unit 12 can calculate, as the calculated set time information, the terminal reference time in the providing source information terminal by adding the difference to the inter-terminal reference time. Moreover, when acquiring the difference based on the data time information of the providing source information terminal and the inter-terminal reference time, the time management unit 12 can calculate, as the calculated set time information, the data time information in the providing source information terminal by adding the difference to the inter-terminal reference time.

In a similar way to the case of the time management system 100 shown in FIG. 1, the time management unit 12 registers the calculated set time information associated with the providing source data in the storage area for the corresponding providing information terminal in the storage unit 15. Note that the information terminals 10a and 10b operate in a similar way to the time management system 100 shown in FIG. 1, except these points.

Such functions of the information terminals 10a and 10b as the providing source information terminals can be achieved by allowing a computer to carry out a program for allowing the computer to function as: a calculation unit configured to calculate the difference based on the set-in-providing-source time information and the inter-terminal reference time, and a providing unit configured to provide the difference associated with the providing source data to the providing destination information terminal.

Moreover, such functions of the information terminals 10a and 10b as the providing destination information terminals can be achieved by allowing a computer to carry out a program for allowing the computer to function as: a storage unit configured to store the calculated set time information associated with the providing source data of the providing source information terminal, an acquisition unit configured to acquire the providing source data and the difference based on the set-in-providing-source time information of the providing source information terminal and the inter-terminal reference time from the providing source information terminal, and a registering unit configured to calculate the calculated set time information based on the difference and the inter-terminal reference time, and register the calculated set time information associated with the providing source data in the storage unit.

### (Time management method)

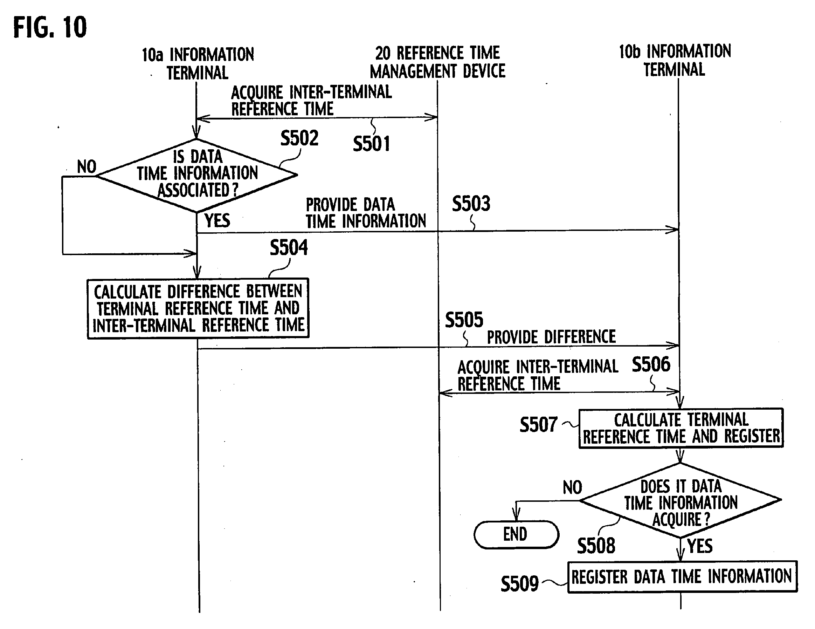

Next, a procedure of a time management method using the time management system 200 will be described. Description will be made below of the case where the information terminal 10a serves as the providing source information terminal and the information terminal 10b serves as the providing destination information terminal. FIG. 10 shows a procedure of the case where the information terminal 10b calculates the terminal reference time as the calculated set time information.

The information terminal 10a acquires the inter-terminal reference time from the reference time management device 20 (S501). The information terminal 10a determines whether or not the data time information is associated with the user data and the control data, which are stored in the storage area 15a of the storage unit 15 (S502). When the data time information is associated with those data, the information terminal 10a provides the data time information of the information terminal 10a as the set-in-providing-source time information to the information terminal 10b (S503).

Next, the information terminal 10a calculates the difference based on the terminal reference time of the information terminal 10a, which is the set-in-providing-source time information, and the inter-terminal reference time (S504). Note that, even when it is determined in Step S502 that the data time information is not associated, the information terminal 10a goes to Step S504, where it calculates the difference. The information terminal 10a provides the difference calculated in Step S504 and the providing source data to the information terminal 10b (S505).

The information terminal 10b acquires the inter-terminal reference time from the reference time management device 20 (S506). The information terminal 10b calculates, as the calculated set time information, the terminal reference time in the information terminal 10a based on the acquired difference and the inter-terminal reference time. The information terminal 10b registers the acquired providing source data and the calculated terminal reference time (calculated set time information) in the storage area of the storing unit 15 for storing the information terminal 10a (S507).

The information terminal 10b determines whether or not the information terminal 10b have acquired the data time information as the set-in-providing-source time information of the information terminal 10a (S508). When having acquired the data time information, the information terminal 10b changes the acquired data time information based on the terminal reference time (calculated set time information) of the information terminal 10a, which is registered in the storage unit 15, and registers the changed data time information in the storage area of the storage unit 15 for storing the information of the information terminal 10a (S509). In the case of determining in Step S508 that the information terminal 10b has not acquired the data time information, the information terminal 10b ends the processing.

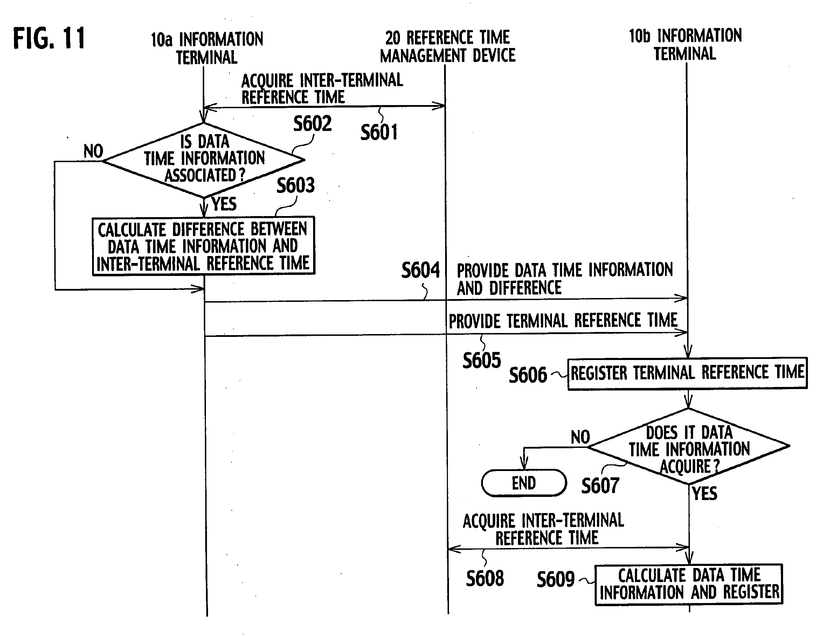

FIG. 11 shows a procedure of the case where the information terminal 10b calculates the data time information as the calculated set time information. The information terminal 10a acquires the inter-terminal reference time from the reference time management device 20 (S601). The information terminal 10a determines whether or not the data time information is associated with the user data and the control data, which are stored in the storage area 15a of the storage unit 15 (S602). When the data time information is associated with those data, the information terminal 10a calculates the difference based on the data time information of the information terminal 10a, which is the set-in-providing-source time information, and the inter-terminal reference time (S603).

The information terminal 10a provides the difference calculated in Step S603 and the data time information of the information terminal 10a as the set-in-providing-source time information to the information terminal 10b (S604). Next, the information terminal 10a provides the providing source data and the terminal reference time of the information terminal 10a as the set-in-providing-source time information to the information terminal 10b (S605). Note that, even when it is determined in Step S602 that the data time information is not associated, the information terminal 10a goes to Step S605, where it provides the terminal reference time of the information terminal 10a to the information terminal 10b.

The information terminal 10b registers the acquired providing source data and the terminal reference time of the information terminal 10a in the storage area of the storage unit 15 for storing the information of the information terminal 10a (S606). The information terminal 10b determines whether or not the information terminal 10b have acquired the data time information as the set-in-providing-source time information of the information terminal 10a (S607). In the case of having acquired the data time information, the information terminal 10b acquires the inter-terminal reference time from the reference time management device 20 (S608).

Then, the information terminal 10b calculates, as the calculated set time information, the data time information in the information terminal 10a based on the difference acquired in Step S604 and the inter-terminal reference time. The information terminal 10b registers the calculated data time information (calculated set time information) in the storage area of the storage unit 15 for storing the information of the information terminal 10a (S609). In the case of determining in Step S607 that the information terminal 10b has not acquired the data time information, the information terminal 10b ends the processing.

According to the time management system 200, the information terminal 10a and 10b and the time management method, each of the information terminals 10a and 10b serves as the providing source information terminal, and can provide the providing source data and the difference based on the set-in-providing-source time information and the inter-terminal reference time to the providing destination information terminal. Therefore, based on the acquired providing source data and providing time information, the information destination terminal can easily maintain the relationship between the providing source data and the set-in-providing-source time information in the providing source information terminal.

Moreover, each of the information terminals 10a and 10b serves as the providing destination information terminal, and can acquire the providing source data and the difference based on the set-in-providing-source time information and the inter-terminal reference time from the providing source information terminal. Then, each of the information terminals 10a and 10b can calculate the calculated set time information based on the difference and the inter-terminal reference time, and can register the calculated set time information associated with the providing source data in the storage unit. Therefore, the providing destination information terminal can easily maintain the relationship between the providing source data and the set-in-providing-source time information in the providing source information terminal.

In particular, even when the providing source information terminal provides the providing source data to plural providing destination information terminals, the relationship between the providing source data and the set-in-providing-source time information in the providing source information terminal can be easily maintained in the plural providing destination information terminals. Specifically, the relationship between the providing source data and the terminal reference time or the data time information in the providing source information terminal can be maintained in the providing destination information terminal.

Although the the invention has been described above by reference to a first embodiment of the invention, the invention is not limited to the first embodiment described above. Modifications and variations of the first embodiment described above will occur to these skilled in the an, in light of the above teachings. For example, either one of the time management servers 40a and 40b may store and provide the inter-terminal reference time, and function as the reference time management device 20.

## Claims

1. A time management server (40a, 40b), comprising:
an acquisition unit (42) configured to acquire providing source data and a terminal reference time in a providing source information terminal (10a, 10b, 10c) from the providing source information terminal (10a, 10b, 10c), the terminal reference time in a providing source information terminal being a time serving as a reference in the information terminal itself;
a calculation unit (42) configured to calculate providing time information to be provided to a providing destination information terminal (10a, 10b, 10c) by using the terminal reference time in the providing source information terminal (10a, 10b, 10c) and an inter-terminal reference time, the inter-terminal reference time being a time common to the providing source information terminal and the providing destination information terminal; and
a providing unit (42) configured to provide the providing source data and the providing time information to the providing destination information terminal (10a, 10b, 10c), wherein
the calculation unit (42) is configured to:
calculate a difference between the terminal reference time in a providing source information terminal and the inter-terminal reference time acquired for each processing;
and the providing unit (42) is configured to
provide the inter-terminal reference time, and, as the providing time information, the calculated difference between the terminal reference time in the providing source information terminal (10a, 10b, 10c) and the inter-terminal reference time acquired for each processing, to the providing destination information terminal (10a, 10b, 10c).

2. A time management system, comprising:
a time management server (40a, 40b) configured to acquire providing source data and a terminal reference time in a providing source information terminal (10a, 10b, 10c) from the providing source information terminal (10a, 10b, 10c), the terminal reference time in a providing source information terminal being a time serving as a reference in the information terminal itself,
to calculate providing time information to be provided to a providing destination information terminal (10a, 10b, 10c) by using the terminal reference time in the providing source information terminal (10a, 10b, 10c) and an inter-terminal reference time, the inter-terminal reference time being a time common to the providing source information terminal and the providing destination information terminal, and
to provide the providing source data and the providing time information to the providing destination information terminal (10a, 10b, 10c); and
a providing destination information terminal (10a, 10b, 10c) configured to acquire the providing source data, the providing time information and the inter-terminal reference time from the time management server (40a, 40b), and register calculated set time information associated with the providing source data in a storage unit, the calculated set time information being based on the providing time information, wherein
the time management server (40a, 40b) is configured to:
calculate a difference between the terminal reference time in a providing source information terminal and the inter-terminal reference time acquired for each processing;
and is configured to:
provide the inter-terminal reference time, and, as the providing time information, the calculated difference between the terminal reference time in the providing source information terminal (10a, 10b, 10c) and the inter-terminal reference time acquired for each processing, to the providing destination information terminal (10a, 10b, 10c).

3. A time management method, comprising:
acquiring providing source data and a terminal reference time in a providing source information terminal (10a, 10b, 10c) from the providing source information terminal (10a, 10b, 10c) by a time management server (40a, 40b), the terminal reference time in a providing source information terminal being a time serving as a reference in the information terminal itself;
calculating, by the time management server (40a, 40b), providing time information to be provided to a providing destination information terminal (10a, 10b, 10c) by using the terminal reference time in the providing source information terminal (10a, 10b, 10c) and an inter-terminal reference time, the inter-terminal reference time being a time common to the providing source information terminal and the providing destination information terminal;
providing the providing source data and the providing time information to the providing destination information terminal (10a, 10b, 10c) by the time management server (40a, 40b);
acquiring the providing source data, the providing time information and the inter-terminal reference time from the time management server (40a, 40b) by the providing destination information terminal (10a, 10b, 10c); and
calculating, by the time management server (40a, 40b), a difference between the terminal reference time in a providing source information terminal and the inter-terminal reference time acquired for each processing;
providing, by the time management server (40a, 40b), the inter-terminal reference time, and, as the providing time information, the calculated difference between the terminal reference time in the providing source information terminal (10a, 10b, 10c) and the inter-terminal reference time acquired for each processing, to the providing destination information terminal (10a, 10b, 10c); and
storing, by the providing destination information terminal (10a, 10b, 10c), calculated set time information associated with the providing source data in a storage unit, the calculated set time information being based on the providing time information.

## Patentansprüche

1. Zeitverwaltungsserver (40a, 40b), umfassend:
eine Erfassungseinheit (42), die konfiguriert ist, Bereitstellungsquelldaten und eine Endgerätreferenzzeit in einem Bereitstellungsquellinformationsendgerät (10a, 10b, 10c) von dem Bereitstellungsquellinformationsendgerät (10a, 10b, 10c) zu erfassen, wobei die Endgerätreferenzzeit in einem Bereitstellungsquellinformationsendgerät eine Zeit ist, die als Referenz in dem Informationsendgerät selbst dient;
eine Berechnungseinheit (42), die konfiguriert ist, Bereitstellungszeitinformationen, die einem Bereitstellungszielortinformationsendgerät (10a, 10b, 10c) bereitzustellen sind, unter Verwendung der Endgerätreferenzzeit in dem Bereitstellungsquellinformationsendgerät (10a, 10b, 10c) und einer endgeräteübergreifenden Referenzzeit zu berechnen, wobei die endgeräteübergreifende Referenzzeit eine Zeit ist, die dem Bereitstellungsquellinformationsendgerät und dem Bereitstellungszielortinformationsendgerät gemeinsam ist; und
eine Bereitstellungseinheit (42), die konfiguriert ist, die Bereitstellungsquelldaten und die Bereitstellungszeitinformationen dem Bereitstellungszielortinformationsendgerät (10a, 10b, 10c) bereitzustellen, wobei
die Berechnungseinheit (42) konfiguriert ist:
eine Differenz zwischen der Endgerätreferenzzeit in einem Bereitstellungsquellinformationsendgerät und der für jede Verarbeitung erfassten endgeräteübergreifenden Referenzzeit zu berechnen;
und die Bereitstellungseinheit (42) konfiguriert ist,
dem Bereitstellungszielortinformationsendgerät (10a, 10b, 10c) die endgeräteübergreifende Referenzzeit und als die Bereitstellungszeitinformationen die berechnete Differenz zwischen der Endgerätreferenzzeit im Bereitstellungsquellinformationsendgerät (10a, 10b, 10c) und der für jede Verarbeitung erfassten endgeräteübergreifenden Referenzzeit bereitzustellen.

2. Zeitverwaltungssystem, umfassend:
einen Zeitverwaltungsserver (40a, 40b), der konfiguriert ist,
Bereitstellungsquelldaten und eine Endgerätreferenzzeit in einem Bereitstellungsquellinformationsendgerät (10a, 10b, 10c) von dem Bereitstellungsquellinformationsendgerät (10a, 10b, 10c) zu erfassen, wobei die Endgerätreferenzzeit in einem Bereitstellungsquellinformationsendgerät eine Zeit ist, die als Referenz in dem Informationsendgerät selbst dient,
Bereitstellungszeitinformationen, die einem Bereitstellungszielortinformationsendgerät (10a, 10b, 10c) bereitzustellen sind, unter Verwendung der Endgerätreferenzzeit in dem Bereitstellungsquellinformationsendgerät (10a, 10b, 10c) und einer endgeräteübergreifenden Referenzzeit zu berechnen, wobei die endgeräteübergreifende Referenzzeit eine Zeit ist, die dem Bereitstellungsquellinformationsendgerät und dem Bereitstellungszielortinformationsendgerät gemeinsam ist, und
die Bereitstellungsquelldaten und die Bereitstellungszeitinformationen dem Bereitstellungszielortinformationsendgerät (10a, 10b, 10c) bereitzustellen; und
ein Bereitstellungszielortinformationsendgerät (10a, 10b, 10c), das konfiguriert ist, die Bereitstellungsquelldaten, die Bereitstellungszeitinformationen und die endgeräteübergreifende Referenzzeit von dem Zeitverwaltungsserver (40a, 40b) zu erfassen und berechnete Sollzeitinformationen, die den Bereitstellungsquelldaten zugeordnet sind, in einer Speichereinheit zu registrieren, wobei die berechneten Sollzeitinformationen auf den Bereitstellungszeitinformationen basieren, wobei
der Zeitverwaltungsserver (40a, 40b) konfiguriert ist:
eine Differenz zwischen der Endgerätreferenzzeit in einem Bereitstellungsquellinformationsendgerät und der für jede Verarbeitung erfassten endgeräteübergreifenden Referenzzeit zu berechnen;
und konfiguriert ist:
dem Bereitstellungszielortinformationsendgerät (10a, 10b, 10c) die endgeräteübergreifende Referenzzeit und als die Bereitstellungszeitinformationen die berechnete Differenz zwischen der Endgerätreferenzzeit im Bereitstellungsquellinformationsendgerät (10a, 10b, 10c) und der für jede Verarbeitung erfassten endgeräteübergreifenden Referenzzeit bereitzustellen.

3. Zeitverwaltungsverfahren, umfassend:
Erfassen von Bereitstellungsquelldaten und einer Endgerätreferenzzeit in einem Bereitstellungsquellinformationsendgerät (10a, 10b, 10c) von dem Bereitstellungsquellinformationsendgerät (10a, 10b, 10c) durch einen Zeitverwaltungsserver (40a, 40b), wobei die Endgerätreferenzzeit in einem Bereitstellungsquellinformationsendgerät eine Zeit ist, die als Referenz in dem Informationsendgerät selbst dient;
Berechnen von Bereitstellungszeitinformationen, die einem Bereitstellungszielortinformationsendgerät (10a, 10b, 10c) bereitzustellen sind, durch den Zeitverwaltungsserver (40a, 40b) unter Verwendung der Endgerätreferenzzeit in dem Bereitstellungsquellinformationsendgerät (10a, 10b, 10c) und einer endgeräteübergreifenden Referenzzeit, wobei die endgeräteübergreifende Referenzzeit eine Zeit ist, die dem Bereitstellungsquellinformationsendgerät und dem Bereitstellungszielortinformationsendgerät gemeinsam ist;
Bereitstellen der Bereitstellungsquelldaten und der Bereitstellungszeitinformationen an das Bereitstellungszielortinformationsendgerät (10a, 10b, 10c) durch den Zeitverwaltungsserver (40a, 40b);
Erfassen der Bereitstellungsquelldaten, der Bereitstellungszeitinformationen und der endgeräteübergreifenden Referenzzeit von dem Zeitverwaltungsserver (40a, 40b) durch das Bereitstellungszielortinformationsendgerät (10a, 10b, 10c); und
Berechnen einer Differenz zwischen der Endgerätreferenzzeit in einem Bereitstellungsquellinformationsendgerät und der für jede Verarbeitung erfassten endgeräteübergreifenden Referenzzeit durch den Zeitverwaltungsserver (40a, 40b);
Bereitstellen der endgeräteübergreifenden Referenzzeit und als die Bereitstellungszeitinformationen der berechneten Differenz zwischen der Endgerätreferenzzeit im Bereitstellungsquellinformationsendgerät (10a, 10b, 10c) und der für jede Verarbeitung erfassten endgeräteübergreifenden Referenzzeit an das Bereitstellungszielortinformationsendgerät (10a, 10b, 10c) durch den Zeitverwaltungsserver (40a, 40b); und
Speichern berechneter Sollzeitinformationen, die den Bereitstellungsquelldaten zugeordnet sind, in einer Speichereinheit durch das Bereitstellungszielortinformationsendgerät (10a, 10b, 10c), wobei die berechneten Sollzeitinformationen auf den Bereitstellungszeitinformationen basieren.

## Revendications

1. Serveur de gestion du temps (40a, 40b) comprenant :
une unité d'acquisition (42) configurée pour acquérir des données de source de fourniture et un temps de référence de terminal dans un terminal d'informations de source de fourniture (10a, 10b, 10c) à partir du terminal d'informations de source de fourniture (10a, 10b, 10c), le temps de référence de terminal dans un terminal d'informations de source de fourniture étant un temps servant comme une référence dans le terminal d'information lui-même ;
une unité de calcul (42) configurée pour calculer des informations de temps de fourniture à fournir à un terminal d'informations de destination de fourniture (10a, 10b, 10c) en utilisant le temps de référence de terminal dans le terminal d'informations de source de fourniture (10a, 10b, 10c) et un temps de référence entre terminaux, le temps de référence entre terminaux étant un temps commun au terminal d'informations de source de fourniture et au terminal d'informations de destination de fourniture ; et
une unité de fourniture (42) configurée pour fournir les données de source de fourniture et les informations de temps de fourniture au terminal d'informations de destination de fourniture (10a, 10b, 10c), dans lequel
l'unité de calcul (42) est configurée pour :
calculer une différence entre le temps de référence de terminal dans un terminal d'informations de source de fourniture et le temps de référence entre terminaux acquis pour chaque traitement ;
et l'unité de fourniture (42) est configurée pour
fournir le temps de référence entre terminaux, et, comme les informations de temps de fourniture, la différence calculée entre le temps de référence de terminal dans le terminal d'informations de source de fourniture (10a, 10b, 10c) et le temps de référence entre terminaux acquis pour chaque traitement, au terminal d'informations de destination de fourniture (10a, 10b, 10c).

2. Système de gestion du temps comprenant :
un serveur de gestion du temps (40a, 40b) configuré
pour acquérir des données de source de fourniture et un temps de référence de terminal dans un terminal d'informations de source de fourniture (10a, 10b, 10c) à partir du terminal d'informations de source de fourniture (10a, 10b, 10c), le temps de référence de terminal dans un terminal d'informations de source de fourniture étant un temps servant comme une référence dans le terminal d'information lui-même,
pour calculer des informations de temps de fourniture à fournir à un terminal d'informations de destination de fourniture (10a, 10b, 10c) en utilisant le temps de référence de terminal dans le terminal d'informations de source de fourniture (10a, 10b, 10c) et un temps de référence entre terminaux, le temps de référence entre terminaux étant un temps commun au terminal d'informations de source de fourniture et au terminal d'informations de destination de fourniture, et
pour fournir les données de source de fourniture et les informations de temps de fourniture au terminal d'informations de destination de fourniture (10a, 10b, 10c) ; et
un terminal d'informations de destination de fourniture (10a, 10b, 10c) configuré pour acquérir les données de source de fourniture, les informations de temps de fourniture et le temps de référence entre terminaux à partir du serveur de gestion du temps (40a, 40b), et enregistrer des informations de temps établies calculées associées aux données de source de fourniture dans une unité de stockage, les informations de temps établies calculées étant basées sur les informations de temps de fourniture, dans lequel
le serveur de gestion du temps (40a, 40b) est configuré pour :
calculer une différence entre le temps de référence de terminal dans un terminal d'informations de source de fourniture et le temps de référence entre terminaux acquis pour chaque traitement ;
et est configuré pour :
fournir le temps de référence entre terminaux, et, comme les informations de temps de fourniture, la différence calculée entre le temps de référence de terminal dans le terminal d'informations de source de fourniture (10a, 10b, 10c) et le temps de référence entre terminaux acquis pour chaque traitement, au terminal d'informations de destination de fourniture (10a, 10b, 10c).

3. Procédé de gestion du temps comprenant :
l'acquisition de données de source de fourniture et d'un temps de référence de terminal dans un terminal d'informations de source de fourniture (10a, 10b, 10c) à partir du terminal d'informations de source de fourniture (10a, 10b, 10c) par un serveur de gestion du temps (40a, 40b), le temps de référence de terminal dans un terminal d'informations de source de fourniture étant un temps servant comme une référence dans le terminal d'information lui-même ;
le calcul, par le serveur de gestion du temps (40a, 40b), d'informations de temps de fourniture à fournir à un terminal d'informations de destination de fourniture (10a, 10b, 10c) en utilisant le temps de référence de terminal dans le terminal d'informations de source de fourniture (10a, 10b, 10c) et un temps de référence entre terminaux, le temps de référence entre terminaux étant un temps commun au terminal d'informations de source de fourniture et au terminal d'informations de destination de fourniture ;
la fourniture des données de source de fourniture et des informations de temps de fourniture au terminal d'informations de destination de fourniture (10a, 10b, 10c) par le serveur de gestion du temps (40a, 40b) ;
l'acquisition des données de source de fourniture, des informations de temps de fourniture et du temps de référence entre terminaux à partir du serveur de gestion du temps (40a, 40b) par le terminal d'informations de destination de fourniture (10a, 10b, 10c) ; et
le calcul, par le serveur de gestion du temps (40a, 40b), d'une différence entre le temps de référence de terminal dans un terminal d'informations de source de fourniture et le temps de référence entre terminaux acquis pour chaque traitement ;
la fourniture, par le serveur de gestion du temps (40a, 40b), du temps de référence entre terminaux, et, comme les informations de temps de fourniture, de la différence calculée entre le temps de référence de terminal dans le terminal d'informations de source de fourniture (10a, 10b, 10c) et le temps de référence entre terminaux acquis pour chaque traitement, au terminal d'informations de destination de fourniture (10a, 10b, 10c) ; et
le stockage, par le terminal d'informations de destination de fourniture (10a, 10b, 10c), d'informations de temps établies calculées associées aux données de source de fourniture dans une unité de stockage, les informations de temps établies calculées étant basées sur les informations de temps de fourniture.
